# EUROPÄISCHE PATENTSCHRIFT

(11) **EP 1 762 448 B1**
(45) Veröffentlichungstag und Bekanntmachung des Hinweises auf die Patenterteilung: **11.05.2011**
(21) Anmeldenummer: 06014990.3
(22) Anmeldetag: 19.07.2006
(51) Int. Cl.: B60S 1/52

(54) **Vorrichtung zum Befeuchten einer Scheibe eines Kraftfahrzeugs und Kombination einer solchen mit einem Karosserieteil**
Device for humidifying the window of a motor vehicle and combination of such device with a bodywork part
Dispositif pour l'humidification de la vitre d'un véhicule et combinaison de ce dispositif avec une

(30) Priorität: 10.09.2005 DE 102005043080
(43) Veröffentlichungstag der Anmeldung: 14.03.2007
(73) Patentinhaber: Volkswagen Aktiengesellschaft, 38436 Wolfsburg (DE)
(72) Erfinder: Sühring, Axel, 38448 Wolfsburg (DE); Kulinna Hans-Jürgen, 29392 Wesendorf (DE)

(56) Entgegenhaltungen:
- US-A1- 2002 008 160
- US-B1- 6 247 652

## Beschreibung

Die vorliegende Erfindung betrifft eine Vorrichtung zum Befeuchten einer Scheibe eines Kraftfahrzeugs, wobei die Vorrichtung einen Düsenkörper, der eine Spritzdüse aufnimmt und bei dem ein Flüssigkeitsanschluss ausgebildet ist, und ein an einem Karosserieteil befestigbares Trägerelement aufweist, an dem der Düsenkörper schwenkbar befestigt ist, wobei das Trägerelement eine Abdeckkappe aufweist und der Flüssigkeitsanschluss auf einer Seite der Abdeckkappe und die Spritzdüse auf der anderen Seite der Abdeckkappe angeordnet ist. Ferner betrifft die Erfindung die Kombination einer solchen Befeuchtungsvorrichtung mit einem Karosserieteil eines Kraftfahrzeugs.

Aus der DE 1 838 995 U1 ist ein Düsenkopf mit einer kugelförmigen Spritzdüse für Scheibenwaschanlagen an Kraftfahrzeugen bekannt. Zur Befestigung des Düsenkopfes ist ein Zuflussstutzen vorgesehen, welcher eine Fahrzeugwand durchdringt. Der Düsenkopf ist mittels einer federnden Klemmscheibe unter Verwendung einer Lederscheibe an der Fahrzeugwand befestigt.

Aus der DE 39 25 800 A1 ist eine Scheibenwaschvorrichtung bekannt, die aus zwei zueinander verschwenkbaren Teilen besteht. Die beiden Teile können über eine Stange gegeneinander verschwenkt werden, welche durch eine Öffnung einer Motorraumhaube durchtritt. Ferner ist ein Teil der Scheibenwaschvorrichtung über zapfenförmige Befestigungselemente in einer Motorhaube befestigt, wobei das Befestigungselement gleichzeitig als Leitung für die Waschflüssigkeit dienen kann.

Aus der DE 43 05 245 A1 ist eine einstellbare Scheibenwaschvorrichtung bekannt mit einem Düsengehäuse, welches zwei Scheibenwaschdüsen aufnimmt und bei dem ein Schlauchstutzen ausgebildet ist. Das Düsengehäuse ist über eine Grundplatte und mehrere Lager an zwei Öffnungen des Innenblechs der Motorraumhaube befestigt.

Schließlich ist aus der DE 196 41 460 A1 eine Vorrichtung zur Befeuchtung einer Scheibe eines Kraftfahrzeugs bekannt, welche einen einteiligen Düsenkörper aufweist, in dem ein Düseneinsatz angeordnet ist, welcher eine Spritzdüse aufnimmt. An dem Düsenkörper ist ein Flüssigkeitsanschluss ausgebildet. Der Düsenkörper wird von zwei Düsenhalterteilen gehalten. Das eine Düsenhalterteil ist drehfest, vorzugsweise einstückig, mit dem Düsenkörper ausgebildet und liegt auf einer Seite an einer Kante einer Öffnung eines Fahrzeugteils an. Zwischen dem zweiten Düsenhalterteil und dem ersten Düsenhalterteil besteht eine Verstellmöglichkeit um den Schwenkwinkel des Düsenkörpers zu ändern.

Bei Befeuchtungsvorrichtungen, die in der Motorraumhaube eines Kraftfahrzeugs eingebaut sind, ergibt sich das Problem, dass in dem Motorraum entweichende Gase in das Waschwasser gelangen können und über die Lüftung des Kraftfahrzeugs zu einer Geruchsbelästigung im Innenraum des Fahrzeugs führen können. Außerdem sollte die Befeuchtungsvorrichtung auf einfache Weise in der Motorraumhaube montiert und angeschlossen werden können. Ferner kann der aus der Motorraumhaube herausragende Teil der Befeuchtungsvorrichtung zu erhöhten Windgeräuschen und Problemen beim Waschen des Fahrzeugs mit herkömmlichen Waschanlagen führen. Zur Vermeidung des letztgenannten Problems schlägt die DE 197 46 059 C2 eine Scheibenwaschvorrichtung mit einem feststehenden, an einer Fahrzeugkarosserie befestigbaren Trägerelement und einem Düsenteil vor, das gegenüber dem Trägerelement mittels eines Gelenks verschwenkbar ist. Dabei ist das feststehende Trägerelement als über dem verschwenkbaren Düsenteil angeordnete Abdeckschale mit einem innenliegenden Hohlraum ausgebildet und das Düsenteil ist innerhalb dieses Hohlraums angeordnet.

Es ist die Aufgabe der vorliegenden Erfindung, eine Befeuchtungsvorrichtung der eingangs genannten Art vorzuschlagen, welche kostengünstig herstellbar und einfach in dem Karosserieteil des Kraftfahrzeugs montierbar und anschließbar ist. Ferner soll eine Kombination eines Karosserieteils eines Kraftfahrzeugs mit einer solchen Befeuchtungsvorrichtung angegeben werden.

Diese Aufgabe wird durch eine Vorrichtung mit den Merkmalen des Anspruchs 1 sowie eine Kombination mit den Merkmalen des Anspruchs 5 gelöst. Vorteilhafte Aus- und Weiterbildungen ergeben sich aus den Unteransprüchen.

Die erfindungsgemäße Befeuchtungsvorrichtung ist dadurch gekennzeichnet, dass das Trägerelement eine Blende aufweist, die sich in einem bestimmten Winkel von der Abdeckkappe weg erstreckt Ferner besitzt die Blende zumindest eine Öffnung, die so angeordnet ist, dass ein aus der Spritzdüse austretender Flüssigkeitsstrahl durch die Öffnung hindurchtritt. Durch die Abdeckkappe kann die Seite der Befeuchtungsvorrichtung, auf der sich der Flüssigkeitsanschluss befindet, in einem Montagehohlraum abgedichtet werden, so dass beispielsweise keine Gase aus dem Motorraum zum Flüssigkeitsanschluss gelangen können. Ferner werden nicht alle Teile des Düsenkörpers von einer Abdeckschale umschlossen, so dass sie weiterhin für die Montage der Befeuchtungsvorrichtung zugänglich bleiben. Für die Ansicht der Befeuchtungsvorrichtung von außen ist die Blende vorgesehen, welche ohne großen Aufwand und daher kostengünstig an die jeweiligen Aufnahmeorte und Formen des Kraftfahrzeugs angepasst werden kann. Die erfindungsgemäße Befeuchtungsvorrichtung ist somit kostengünstig herstellbar und an verschiedene Fahrzeugtypen anpassbar, da der Düsenkörper unverändert bei verschiedenen Fahrzeugtypen zum Einsatz kommen kann und nur das Trägerelement angepasst werden muss.

Gemäß einer bevorzugten Ausgestaltung der erfindungsgemäßen Befeuchtungsvorrichtung ist die Abdeckkappe des Trägerelements plattenförmig. Sie besitzt eine Aussparung zum Durchtritt des Düsenkörpers. Ferner weist der Düsenkörper bevorzugt eine Einstelleinrichtung zum Einstellen des Schwenkwinkels des Düsenkörpers auf, die durch die Öffnung der Blende oder durch eine weitere Öffnung in der Blende betätigbar ist. Auf diese Weise ist der Winkel des Flüssigkeitsstrahls, welcher beim Betrieb der Befeuchtungsvorrichtung durch die Spritzdüse austritt, einfach von außen einstellbar.

Gemäß einer bevorzugten Ausgestaltung der erfindungsgemäßen Befeuchtungsvorrichtung schließt sich an die Abdeckkappe des Trägerelements eine Halterung zur schwenkbaren Aufnahme des Düsenkörpers an, wobei das Ende des Düsenkörpers, bei dem die Spritzdüse angeordnet ist, mit so viel Spiel von der Öffnung der Blende aufgenommen ist, dass der Düsenkörper um einen bestimmten Schwenkwinkel zum Einstellen des Flüssigkeitsstrahlwinkels verschwenkt werden kann.

Die erfindungsgemäße Kombination eines Karosserieteils eines Kraftfahrzeugs mit der vorstehend beschriebenen Befeuchtungsvorrichtung ist dadurch gekennzeichnet, dass das Karosserieteil einen Hohlraum mit einer Öffnung aufweist, dass die Abdeckkappe des Trägerelements der Befeuchtungsvorrichtung so auf die Öffnung des Hohlraums aufgesetzt ist, dass sich der Flüssigkeitsanschluss innerhalb des Hohlraums befindet und die Spritzdüse außerhalb des Hohlraums.

Bei dem Karosserieteil kann es sich insbesondere um eine Motorraumhaube des Kraftfahrzeugs handeln, wobei die Abdeckkappe die Öffnung des Hohlraums gasdicht abschließt. Der Hohlraum ist insbesondere zwischen einem Außenblech und einem Innenblech der Motorraumhaube gebildet, wobei die Öffnung des Hohlraums in dem Innenblech der Motorraumhaube ausgebildet ist. Diese Ausgestaltung hat den Vorteil, dass die Befeuchtungsvorrichtung von außen kaum sichtbar ist, da sie in das Innenblech der Motorraumhaube eingesetzt ist. Da die Abdeckkappe den Aufnahmehohlraum in der Motorraumhaube gasdicht abschließt und blickdicht abdeckt, können einerseits keine Gase aus dem Motorraum in den Hohlraum gelangen, in dem sich der Flüssigkeitsanschluss befindet. Andererseits kann man auch beim Öffnen der Motorraumhaube nicht auf die Anschlüsse der Befeuchtungsvorrichtung blicken, was aus ästhetischer Sicht nachteilhaft wäre.

Die Erfindung wird nun anhand eines Ausführungsbeispiels mit Bezug zu den Zeichnungen erläutert.
- Fig. 1: zeigt schematisch einen Schnitt durch ein Ausführungsbeispiel der erfindungsgemäßen Befeuchtungsvorrichtung,
- Fig. 2: zeigt eine Ansicht des Ausführungsbeispiels der Befeuchtungsvorrichtung in entgegengesetzter Richtung des Flüssigkeitsstrahls,
- Fig. 3: zeigt eine Ansicht des Ausführungsbeispiels der Befeuchtungsvorrichtung von hinten,
- Fig. 4: zeigt einen Schnitt der Darstellung gemäß Fig. 2 entlang der Linie B-B,
- Fig. 5: zeigt einen Schnitt der Ansicht gemäß Fig. 2 in Richtung der Linie A-A, und
- Fig. 6: zeigt schematisch die Kombination des Ausführungsbeispiels der Befeuchtungsvorrich- tung mit einem Karosserieteil eines Kraftfahrzeugs.

Die Befeuchtungsvorrichtung besteht im Wesentlichen aus zwei Teilen, nämlich einem Düsenkörper 1 und einem Trägerelement 4. Dabei ist der Düsenkörper 1 so an dem Trägerelement 4 befestigt, dass er in einem kleinen Winkelbereich schwenkbar ist.

Der Düsenkörper 1 ist ein Kunststoffteil, bei dem an einem Ende ein Flüssigkeitsanschluss 3, z.B. ein Anschlussstutzen, ausgebildet ist. An dem anderen Ende des Düsenkörpers 1 nimmt dieser eine Spritzdüse auf. Die Spritzdüse 2 kann in einem separaten Teil gebildet sein. Sie kann jedoch auch einstückig in dem Düsenkörper 1 ausgebildet sein. In dem Düsenkörper 1 erstreckt sich ein Flüssigkeitskanal von dem Anschluss 3 bis zur Austrittsöffnung der Spritzdüse 2. In Längsrichtung, etwa in der Mitte des Düsenkörpers 1, ist eine Befestigungseinrichtung vorgesehen, durch welche der Düsenkörper 1 in einer Halterung 17 des Trägerelements 4 um die Achse 11 schwenkbar befestigt werden kann. Die Halterung 17 für die schwenkbare Aufnahme des Düsenkörpers 1 ist etwa in der Mitte der Abdeckkappe ausgebildet.

Das Trägerelement 4 besteht im Wesentlichen aus einer plattenförmigen Abdeckkappe 4 und einer Blende 6, die sich in einem Winkel α von der Abdeckkappe 5 weg erstreckt. Der α Winkel zwischen der Abdeckkappe 5 und der Blende 6 ist ein spitzer Winkel. Er ist vorzugsweise in einem Bereich zwischen 70° und 80°. Im vorliegenden Ausführungsbeispiel ist der Winkel α etwa 77°.

In der Abdeckkappe 5 des Trägerelements 4 ist eine Aussparung, insbesondere eine Öffnung, zum Durchtritt des Düsenkörpers gebildet. Der Düsenkörper 1 ist so an dem Trägerelement 4 befestigt, dass sich der Flüssigkeitsanschluss 3 auf der einen Seite der Abdeckkappe 5 befindet, sich der Düsenkörper 1 von dem Flüssigkeitsanschluss 3 ausgehend durch die Aussparung oder Öffnung der Abdeckkappe 5 hindurch erstreckt und der Teil des Düsenkörpers 1, welcher die Spritzdüse 2 aufnimmt, auf der anderen Seite der Abdeckkappe 5 angeordnet ist.

Die Blende 6 besitzt eine Öffnung 8, in welcher sich das vordere Ende des Düsenkörpers 1 bündig befindet. Bei diesem Ende des Düsenkörpers 1 ist die Spritzdüse 2 angeordnet, so dass ein Flüssigkeitsstrahl, der bei der Spritzdüse 2 austritt, durch die Öffnung 8 der Blende 6 auf die Scheibe eines Kraftfahrzeugs gespritzt werden kann.

Die Blende 6 besitzt eine weitere Öffnung 9, in welcher eine Einstelleinrichtung 10 zum Einstellen des Schwenkwinkels des Düsenkörpers 1 angeordnet ist. Im vorliegenden Fall ist die Einstelleinrichtung 10 eine Schraube, die so mit dem Düsenkörper 1 und dem Trägerelement 4 gekoppelt ist, dass sich beim Drehen der Schraube der Winkel zwischen dem Düsenkörper 1 und dem Trägerelement 4 ändert. Damit ein solches Schwenken des Düsenkörpers 1 möglich ist, ist zwischen dem vorderen Ende des Düsenkörpers 1 und der Öffnung 8 der Blende 6 so viel Spiel vorgesehen, dass der Düsenkörper 1 um den gewünschten Winkelbereich verschwenkt werden kann.

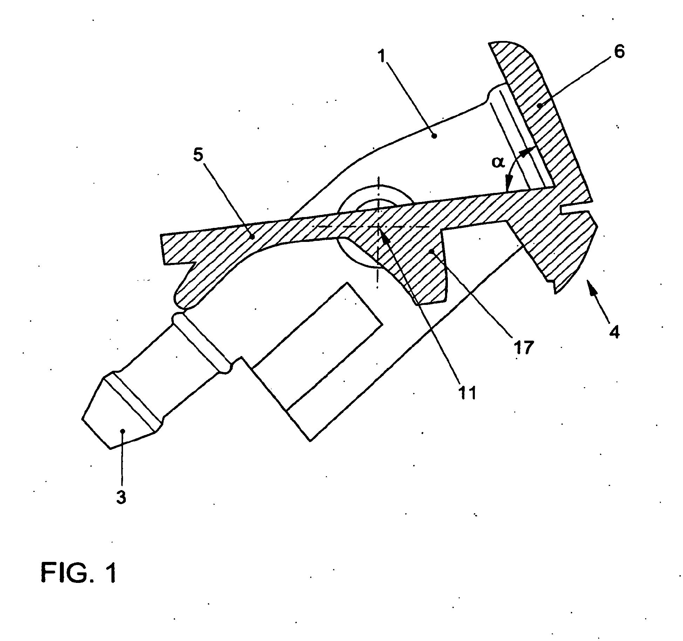

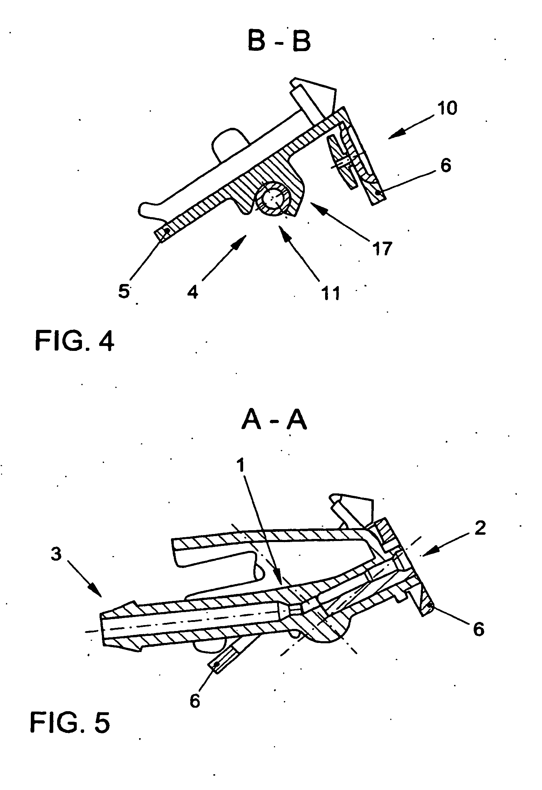

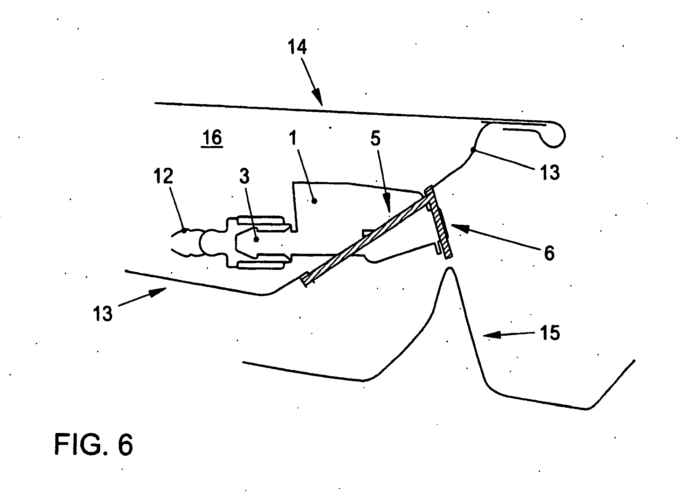

Fig. 6 zeigt die Kombination eines Karosserieteils eines Kraftfahrzeugs und der vorstehend mit Bezug zu den Fig. 1 bis 5 erläuterten Vorrichtung zum Befeuchten einer Scheibe des Kraftfahrzeugs. Die Motorraumhaube des Fahrzeugs besteht zumindest in dem Abschnitt, der benachbart zu der Windschutzscheibe ist, aus einem Außenblech 14, welches von außen sichtbar ist, und aus einem Innenblech 13, welches nur bei geöffneter Motorraumhaube sichtbar ist. Zwischen dem Außenblech 14 und dem Innenblech 13 ist ein Hohlraum 16 gebildet. Der Hohlraum 16 ist über eine Öffnung zugänglich, welche in dem Innenblech 13 gebildet ist. Durch diese Öffnung wird die Befeuchtungsvorrichtung so eingesetzt, dass die Öffnung gas- und blickdicht von der Abdeckkappe 5 des Trägerelements 4 der Befeuchtungsvorrichtung abgedeckt bzw. abgedichtet wird. Wenn die Befeuchtungsvorrichtung in die Öffnung des Innenblechs der Motorraumhaube eingesetzt ist, befindet sich der Teil des Düsenkörpers 1, bei welchem der Wasser anschluss 3 ausgebildet ist, innerhalb des Hohlraums 16 und der Teil des Düsenkörpers 1, welcher die Spritzdüse 2 aufnimmt, außerhalb des Hohlraums 16.

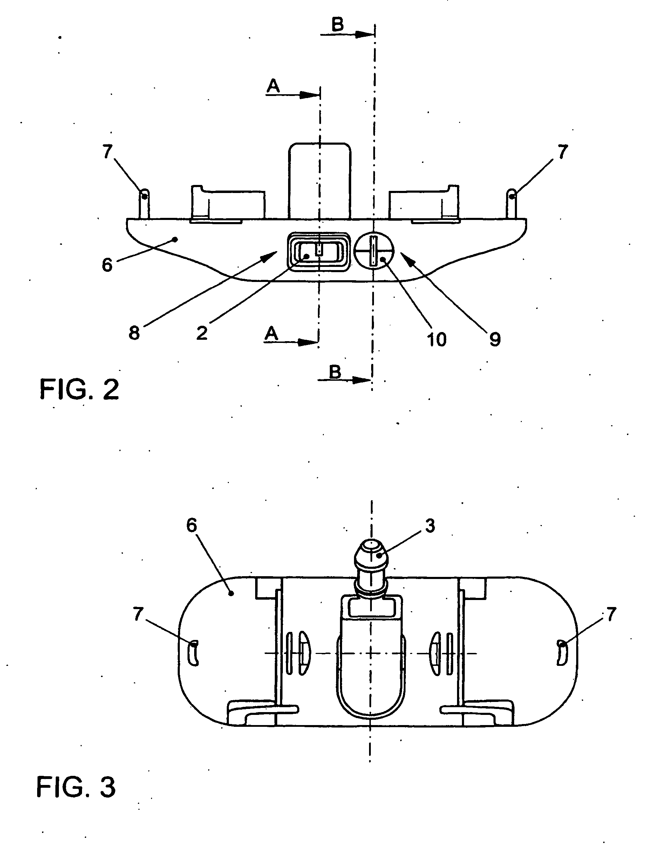

In den Hohlraum 16 ist außerdem ein Wasserschlauch 12 eingeführt, welcher von einem Spritzwasserreservoir ausgeht. Bevor die Abdeckkappe 5 in der Öffnung des Innenblechs 13 befestigt wird, wird das Ende des Schlauches 12 über den Flüssigkeitsanschluss 3 des Düsenkörpers 1 gestülpt und an diesem befestigt. Die Öffnung in dem Innenblech 13 ist daher so groß, dass man mit den Fingern in den Hohlraum 16 hineingreifen kann, um das Ende des Schlauches 12 zu fassen. Nachdem der Schlauch an dem Düsenkörper 1 befestigt worden ist, wird die Abdeckkappe 5 mittels Vorsprüngen 7 (siehe Fig. 2 und 3) in die Öffnung des Innenblechs 13 eingeklippst. In den Hohlraum 16 können danach keine Gase aus dem Motorraum gelangen. Außerdem kann man bei geöffneter Motorraumhaube die Anschlüsse der Befeuchtungsvorrichtung nicht sehen.

Unterhalb des Innenblechs 13 der Motorraumhaube ist ein weiteres Fahrzeugteil vorgesehen. Bei dem gezeigten Ausführungsbeispiel ist dies die Abdeckung 15 des Wasserkastens. Die Blende 6 des Trägerelements 4 der Befeuchtungsvorrichtung ist so ausgebildet, dass sie sich von dem Ende der Abdeckkappe 5 in Richtung der Wasserkastenabdeckung 15 erstreckt und unmittelbar vor dieser Abdeckung 15 endet. Die Blende 6 schließt somit die Lücke zwischen dem Innenblech 13 und der Wasserkastenabdeckung 15 ab. Blickt man aus der Richtung der Windschutzscheibe des Kraftfahrzeugs in den Bereich unter die vordere Kante der Motorraumhaube, ist nur der vordere Teil des Innenblechs 13, die Blende 6 und ein Teil der Wasserkastenabdeckung 15 zu sehen. Man kann aufgrund der Ausgestaltung der erfindungsgemäßen Befeuchtungsvorrichtung in Kombination mit den Karosserieteilen bzw. der Wasserkastenabdeckung 15 nicht weiter unter das Innenblech 13 der Motorraumhaube sehen. Außerdem können keine Fremdkörper durch diesen Spalt zwischen der Wasserkastenabdeckung 15 und der Motorraumhaube gelangen.

### Bezugszeichenliste

- 1: Düsenkörper
- 2: Spritzdüse
- 3: Flüssigkeitsanschluss
- 4: Trägerelement
- 5: Abdeckkappe
- 6: Blende
- 7: Befestigungsvorsprünge
- 8: Öffnung für die Spritzdüse
- 9: Öffnung für die Einstelleinrichtung
- 10: Einstelleinrichtung
- 11: Schwenkachse
- 12: Schlauch
- 13: Innenblech der Motorraumhaube
- 14: Außenblech der Motorraumhaube
- 15: Wasserkastenabdeckung
- 16: Hohlraum
- 17: Halterung des Trägerelements 4

## Patentansprüche

1. Vorrichtung zum Befeuchten einer Scheibe eines Kraftfahrzeugs, wobei die Vorrichtung
- einen Düsenkörper (1),
- der eine Spritzdüse (2) aufnimmt
- und bei dem ein Flüssigkeitsanschluss (3) ausgebildet ist,
- und ein Trägerelement (4) aufweist,
- an dem der Düsenkörper (1) schwenkbar befestigt ist
- und das eine Abdeckkappe (5) aufweist,
- wobei der Flüssigkeitsanschluss (3) auf der einen Seite von dieser und die Spritzdüse (2) auf der anderen Seite angeordnet sind,
- und das eine Blende (6) aufweist,
- die sich im Winkel (α) von der Abdeckkappe (5) weg erstreckt
- und zumindest eine Öffnung (8) aufweist,
- die so angeordnet ist, dass ein aus der Spritzdüse (2) austretender Flüssigkeitsstrahl durch die Öffnung (8) geht,
- und das an einem Karosserieteil befestigbar ist:

2. Vorrichtung nach Anspruch 1,
**dadurch gekennzeichnet,**
**dass** die Abdeckkappe (5) des Trägerelements (4) plattenförmig ist und eine Aussparung zum Durchtritt des Düsenkörpers (1) besitzt.

3. Vorrichtung nach einem der vorstehenden Ansprüche,
**dadurch gekennzeichnet,**
**dass** der Düsenkörper (1) eine Einstelleinrichtung (10) zum Einstellen des Schwenkwinkels des Düsenkörpers (1) aufweist, die durch die Öffnung der Blende (6) oder durch eine weitere Öffnung (9) in der Blende (6) betätigbar ist.

4. Vorrichtung nach Anspruch 2 oder 3,
**dadurch gekennzeichnet,**
**dass** sich an die Abdeckkappe (5) des Trägerelements (4) eine Halterung (17) zur schwenkbaren Aufnahme des Düsenkörpers (1) anschließt und dass das Ende des Düsenkörpers (1), bei dem die Spritzdüse (2) angeordnet ist, mit so viel Spiel von der Öffnung (9) der Blende (6) aufgenommen ist, dass der Düsenkörper (1) um einen bestimmten Schwenkwinkel zum Einstellen des Flüssigkeitsstrahlwinkels verschwenkt werden kann.

5. Kombination eines Karosserieteils (13, 14) eines Kraftfahrzeugs und einer Vorrichtung zum Befeuchten einer Scheibe des Kraftfahrzeugs nach einem der vorstehenden Ansprüche,
**dadurch gekennzeichnet,**
**dass** das Karosserieteil (13, 14) einen Hohlraum (16) mit einer Öffnung aufweist und dass die Abdeckkappe (5) des Trägerelements (4) der Befeuchtungsvorrichtung so auf die Öffnung des Hohlraums (16) aufgesetzt ist, dass sich der Flüssigkeitsanschluss (3) innerhalb des Hohlraums (16) befindet und die Spritzdüse (2) außerhalb des Hohlraums (16) befindet.

6. Kombination nach Anspruch 5,
**dadurch gekennzeichnet,**
**dass** das Karosserieteil (13, 14) eine Motorraumhaube des Kraftfahrzeugs ist und dass die Abdeckkappe (5) die Öffnung des Hohlraums (16) gasdicht abschließt.

7. Kombination nach Anspruch 6,
**dadurch gekennzeichnet,**
**dass** der Hohlraum (16) zwischen einem Außenblech (14) und einem Innenblech (13) der Motorraumhaube gebildet ist und dass die Öffnung des Hohlraums (16) in dem Innenblech (13) der Motorraumhaube ausgebildet ist.

## Claims

1. Device for moistening a window of a motor vehicle, the device having
- a nozzle body (1)
- which receives a spray nozzle (2)
- and in which a liquid connection (3) is formed,
- and a carrier element (4),
- to which the nozzle body (1) is pivotably fastened
- and which has a cover cap (5),
- the liquid connection (3) being arranged on one side of the latter and the spray nozzle (2) being arranged on the other side,
- and which has a screen (6)
- which extends at the angle (α) away from the cover cap (5)
- and has at least one orifice (8)
- which is arranged such that a liquid jet emerging from the spray nozzle (2) passes through the orifice (8),
- and which is fastenable to a body part.

2. Device according to Claim 1, **characterized in that** the cover cap (5) of the carrier element (4) is plate-shaped and possesses a clearance for the passage of the nozzle body (1).

3. Device according to one of the preceding claims, **characterized in that** the nozzle body (1) has a setting means (10) for setting the pivot angle of the nozzle body (1), which setting means is actuable through the orifice of the screen (6) or through a further orifice (9) in the screen (6).

4. Device according to Claim 2 or 3, **characterized in that** the cover cap (5) of the carrier element (4) has adjoining it a holder (17) for the pivotable reception of the nozzle body (1), and **in that** that end of the nozzle body (1) in which the spray nozzle (2) is arranged is received by the orifice (9) of the screen (6) with so much play that the nozzle body (1) can be pivoted through a specific pivot angle for the purpose of setting the liquid-jet angle.

5. Combination of a body part (13, 14) of a motor vehicle and of a device for moistening a window of the motor vehicle according to one of the preceding claims, **characterized in that** the body part (13, 14) has a cavity (16) with an orifice, and **in that** the cover cap (5) of the carrier element (4) of the moistening device is placed into the orifice of the cavity (16) such that the liquid connection (3) is located inside the cavity (16) and the spray nozzle (2) is located outside the cavity (16).

6. Combination according to Claim 5, **characterized in that** the body part (13, 14) is an engine space bonnet of the motor vehicle, and **in that** the cover cap (5) closes off the orifice of the cavity (16) in a gas-tight manner.

7. Combination according to Claim 6, **characterized in that** the cavity (16) is formed between an outer panel (14) and an inner panel (13) of the engine space bonnet, and **in that** the orifice of the cavity (16) is formed in the inner panel (13) of the engine space bonnet.

## Revendications

1. Dispositif pour l'humidification d'une vitre de véhicule automobile, le dispositif comportant un corps de buse (1) :
- logeant une buse d'injection (2) ;
- au niveau duquel un raccord de liquide (3) est réalisé;
- comportant un élément de support (4) :
- au niveau duquel le corps de buse (1) peut être fixé de façon pivotante;
- qui comporte une calotte de revêtement (5) ;
- le raccord de liquide (3) étant disposé sur un côté de celle-ci et la buse d'injection (2) sur l'autre côté ;
- comportant un diaphragme (6) :
- s'écartant selon l'angle (α) par rapport à la calotte de revêtement (5) ;
- comportant au moins une ouverture (8) :
- qui est disposée de telle sorte qu'un jet de liquide sortant de la buse d'injection (2) traverse l'ouverture (8) ; et
- pouvant être fixée à une partie de carrosserie.

2. Dispositif selon la revendication 1, **caractérisé en ce que** la calotte de revêtement (5) de l'élément de support (4) prend une forme de plaque et possède un évidement pour le passage du corps de buse (1).

3. Dispositif selon l'une quelconque des revendications précédentes, **caractérisé en ce que** le corps de buse (1) comporte un dispositif de réglage (10) pour régler l'angle de pivotement du corps de buse (1), ledit dispositif pouvant être actionné à travers l'ouverture du diaphragme (6) ou à travers une autre ouverture (9) prévue dans le diaphragme (6).

4. Dispositif selon la revendication 2 ou 3, **caractérisé en ce qu'**une fixation (17) est raccordée à la calotte de revêtement (5) de l'élément de support (4) pour loger de façon pivotante le corps de buse (1) et que l'extrémité du corps de buse (1) dans laquelle la buse d'injection (2) est disposée est logée avec un jeu tel par rapport à l'ouverture (9) du diaphragme (6) que le corps de buse (1) peut pivoter d'un angle de pivotement défini en vue de régler l'angle du jet de liquide.

5. Combinaison d'une partie de carrosserie (13, 14) de véhicule automobile et d'un dispositif pour l'humidification d'une vitre de véhicule automobile selon l'une quelconque des revendications précédentes, **caractérisée en ce que** la partie de carrosserie (13, 14) comporte un espace creux (16) doté d'une ouverture et que la calotte de revêtement (5) de l'élément de support (4) du dispositif d'humidification est placé de telle sorte sur l'ouverture de l'espace creux (16) que le raccord de liquide (3) se trouve à l'intérieur de l'espace creux (16) et que la buse d'injection (2) se trouve à l'extérieur de l'espace creux (16).

6. Combinaison selon la revendication 5, **caractérisée en ce que** la partie de carrosserie (13, 14) est un capot de compartiment-moteur du véhicule automobile et que la calotte de revêtement (5) ferme l'ouverture de l'espace creux (16) de façon étanche aux gaz.

7. Combinaison selon la revendication 6, **caractérisée en ce que** l'espace creux (16) est formé entre une tôle extérieure (14) et une tôle intérieure (13) du capot de compartiment-moteur et que l'ouverture de l'espace creux (16) est réalisée dans la tôle intérieure (13) du capot de compartiment-moteur.
